Europäisches Patentamt

European Patent Office

Office européen des brevets

(11) Publication number : **0 506 585 A1**

(12) **EUROPEAN PATENT APPLICATION**

(21) Application number : 92420077.7

(22) Date of filing : 16.03.92

(51) Int. Cl.⁵ : **C09K 11/85, G21K 4/00**

(30) Priority : 27.03.91 US 676160

(43) Date of publication of application :
30.09.92 Bulletin 92/40

(84) Designated Contracting States :
**AT BE CH DE DK ES FR GB GR IT LI LU MC NL PT SE**

(71) Applicant : **EASTMAN KODAK COMPANY**
**343 State Street**
**Rochester, New York 14650-2201 (US)**

(72) Inventor : **Eachus, Raymond S., c/o EASTMAN KODAK COMPANY**
**Patent Legal Staff, 343 State Street**
**Rochester, New York 14650-2201 (US)**

Inventor : **McDugle, Woodrow G., c/o EASTMAN KODAK COMPANY**
**Patent Legal Staff, 343 State Street**
**Rochester, New York 14650-2201 (US)**
Inventor : **Nuttall, Robert H., c/o EASTMAN KODAK COMPANY**
**Patent Legal Staff, 343 State Street**
**Rochester, New York 14650-2201 (US)**
Inventor : **Kavaliunas, Arunas V., c/o EASTMAN KODAK COMPANY**
**Patent Legal Staff, 343 State Street**
**Rochester, New York 14650-2201 (US)**

(74) Representative : **Parent, Yves et al**
**Kodak-Pathé Département Brevets et Licences Centre de Recherches et de Technologie Zone Industrielle B.P. 21**
**F-71102 Chalon sur Saône Cedex (FR)**

(54) **Alkaline earth fluorohalide storage phosphors, processes for their preparation and storage phosphor screens.**

(57) Processes are disclosed which reduce and stabilize the optical density of alkaline earth fluorohalide phosphors. Optical density reducing procedures include contacting the phosphor while molten with bromine or chlorine gas, quenching the molten phosphor and annealing the phosphor in a nonoxidizing atmosphere. Phosphor particles are disclosed having per millimeter optical densities of less than 1.5 when measured as packed powders in a transparent refractive index matching liquid. Monocrystalline elements are disclosed that exhibit per millimeter optical densities of less than 0.2. Optical densities remain stable on storage. Storage phosphor screens constructed of either the particulate or monocrystalline phosphors are disclosed.

FIG. 2

EP 0 506 585 A1

Jouve, 18, rue Saint-Denis, 75001 PARIS

The invention pertains to improvements in storage phosphors. Specifically, the invention relates to improvements in storage phosphors which, following exposure to X-radiation, emit electromagnetic radiation of a first wavelength when stimulated with electromagnetic radiation of a second wavelength. The invention additionally relates to processes for preparation of the storage phosphor and for imaging screens containing the phosphors.

Roentgen discovered X-radiation by the inadvertent exposure of a silver halide photographic element. In 1913 the Eastman Kodak Company introduced its first product specifically intended to be exposed by X-radiation. Shortly thereafter it was recognized that patient exposure to X-radiation in diagnostic imaging could be markedly reduced by employing a phosphor containing intensifying screen in combination with the radiographic element. Since silver halide exhibits a limited capacity to absorb X-radiation, the phosphor in the intensifying screen was relied upon to absorb the major portion of the X-radiation and promptly transfer the energy to the radiographic element in the form of light, which silver halide more efficiently absorbs. This remains today the most widely used and accepted mode of X-radiation diagnostic imaging.

Luckey U.S. Patent 3,859,527 (R-1) proposed an approach to diagnostic imaging that eliminated the silver halide radiographic element. The phosphor containing screen was imagewise exposed to X-radiation, but, instead of relying on the prompt emission of longer wavelength electromagnetic radiation, energy provided by X-radiation was stored in the phosphor particles. Subsequently, the X-radiation image pattern was reconstructed by exposing the screen point-by-point to stimulating electromagnetic radiation of one wavelength while recording and correlating with the point of stimulation the intensity of emission of electromagnetic radiation of a second wavelength.

In attempting to raise the efficiency of such an imaging system to a competitive level the first task was to identify an efficient storage phosphor. By routine review of the properties of known intensifying screen phosphors it was quickly determined that alkaline earth fluorohalide phosphors were attractive storage phosphor candidates. This has been followed by more than a decade of intense investigations, seeking improvements of alkaline earth fluorohalide storage phosphors and the procedures by which they are prepared. Incremental improvements have been realized by adding small amounts of modifying elements while preparation procedures have shown little, if any, advance. The following are illustrative of patents that disclose variations in the composition or preparation of alkaline earth fluorohalide phosphors:

(R-2) Ferretti U.S. Patent 3,988,252 (note particularly the preparation procedure of column 3, line 61, through column 4, line 39);

(R-3) Ferretti U.S. Patent 4,080,306 (note particularly the 900°C firing temperature and chloride flux of Example 41);

(R-4) Mori et al U.S. Patent 4,138,529 (note particularly the general phosphor formula of col. 2, line 65);

(R-5) Stevels et al U.S. Patent 4,157,981 (note particularly the firing procedure of Example 1);

(R-6) Kotera et al U.S. Patent 4,261,854 (note particularly the phosphor formula at col. 2, line 64, and the preparation procedure of col. 3, lines 10 to 40);

(R-7) Kurlyama et al European 0 128 264 (patent application published 1984, note particularly the quenching procedure of Example 1);

(R-8) Nakamura et al U.S. Patent 4,532,071 (note particularly the phosphor formula of col. 3, line 61, and the preparation procedure of Example 1);

(R-9) Miyahara et al U.S. Patent 4,539,138 (note particularly the phosphor formula of col. 4, line 46, and the preparation procedure of col. 6, line 53, to col. 7, line 27);

(R-10) Kotera et al U.S. Patent 4,512,911 (note particularly the phosphor formula of col. 4, line 11, and the preparation procedure of col. 4, lines 27 to 61);

(R-11) Brixner U.S. Patent 4,608,190 (note particularly the phosphor formula of col. 5, line 35, and the preparation procedure of Examples 11-15);

(R-12) Umemoto et al U.S. Patent 4,689,278 (note particularly the phosphor formula of col. 4, line 48, and the phosphor preparation process of Example 1);

(R-13) Nakamura et al U.S. Patent 4,698,508 (note particularly the phosphor formula of col. 2, line 37, and the phosphor preparation process of Example 1);

(R-14) Reddy et al European 0 254 836, patent application published 1988, note cooling step of Example 1);

(R-15) Katoh et al U.S. Patent 4,871,474 (note particularly the phosphor formula of col. 2, line 12, and the phosphor preparation process of Example 1);

(R-16) Takahashi et al U.S. Patent 4,876,161 (note particularly the phosphor formula of col. 5, line 45, and the phosphor preparation process of col. 5, lines 5 to 22);

(R-17) Kotera et al U.S. Patent 4,889,996 (note particularly the phosphor formula of col.3, line 46, and the phosphor preparation process of col. 3, line 61, to col. 4, line 29);

(R-18) Takahashi et al U.S. Patent 4,894,548 (note particularly the phosphor formula of col. 3, line 40, and the phosphor preparation process of col. 5, lines 27 to 42);

(R-19) Takahashi et al U.S. Patent 4,895,772 (note particularly the phosphor formula of col. 5, line 15, and the phosphor preparation process of Example 1);

(R-20) Takahashi et al U.S. Patent 4,926,047 (note particularly the phosphor formula of col. 2, line 33, and the phosphor preparation process of Example 1); and

(R-21) Kotera et al U.S. Patent 4,978,472 (note particularly the phosphor formula of col. 2, line 50).

Intensifying screens (those used with silver halide radiographic elements) are typically constructed by coating a phosphor layer comprised of a mixture of phosphor particles and a binder on a support. The phosphor layer is intentionally constructed to be turbid. Usually a high ratio of phosphor to binder is employed to leave air voids in the coating, thereby creating large mismatches in refractive indices at interfaces and maximizing the scattering of emitted light. This maximizes the speed of the screen. If improved image definition is desired, the typical approach is to decrease the mean size of the phosphor particles, add a small amount of an absorber (e.g., dye or carbon black) to the binder, coat the phosphor layer on a non-reflective support or utilize a combination of these approaches.

Typically storage phosphor screens have been constructed by simply substituting storage phosphor particles for prompt emission phosphor particles, without otherwise significantly altering screen structure. This leads to serviceable, but far less than ideal storage phosphor screens. Turbid screen constructions not only scatter emitted light, but also scatter light used for point-by-point stimulation. Usually a highly focused laser beam is employed for point stimulation to minimize stimulation of adjacent screen areas. Since a significant degree of scattering of the laser beam occurs within a turbid screen, the customary solution to the problem of unwanted stimulation of adjacent points is to reduce intensity of the laser beam until stimulated emission from adjacent areas not intended to be addressed is reduced to a tolerable level.

DeBoer et al U.S. Patent 4,733,090 (R-22) recognized that the refractive indices of storage phosphor particles and their binders should be matched at the wavelength of stimulation to improve the imaging properties of storage phosphor screens.

There has been for many years a general recognition that the highest image definitions should be obtainable from so-called "transparent" screens (i.e., those that intentionally minimize internal light scattering). C. Albrecht, W.J. Oosterkamp and C. van Osenburggen, Med. Mundi $\underline{5}$, 80, 1959 (R-23) illustrates the preparation of a screen using thallium doped KI and CsI monocrystalline elements. F.J. Studer and D.A. Cusano, J. Opt. Soc. Am. $\underline{45}$, 493, 1955 (R-24) attempted to produce a transparent phosphor screen by evaporating thin films of ZnS:Mn. These films could be made transparent by optical polishing, but they frequently became turbid on exposure to air.

P.F. Carcia and L.H. Brixner, "Thin Solid Films", 115, 89, 1984 (R-25) produced thin films of europium doped barium fluorochloride by vacuum evaporation. These continuous films were transparent immediately following preparation and were X-radiation stimulable. Unfortunately, they rapidly became turbid when exposed to air, a problem attributed to the partial decomposition of BaFCl to $BaCl_2 \cdot 2H_2O$ and $BaF_2$. It is generally recognized by those working with alkaline earth fluorohalide storage phosphors in their customary particulate form, as incorporated in turbid screens, that the phosphor particles are hygroscopic. Further, the particles are known to increase progressively in optical density when left in contact with ambient air for extended periods of time.

Brief Description of the Drawings

Figure 1 is a schematic sectional detail of a conventional turbid screen construction.

Figure 2 is a schematic sectional detail of a storage phosphor screen according to the invention employing microcrystalline storage phosphor particles.

Figure 3 is a schematic sectional view of a storage phosphor screen according to the invention employing monocrystalline storage phosphor elements.

The screen features have been enlarged for ease of depiction.

In one aspect, this invention is directed to a process of improving the properties of a storage phosphor capable of internally storing energy received by exposure to X-radiation and subsequently emitting electromagnetic radiation of a first wavelength when stimulated with electromagnetic radiation of a second wavelength comprised of heating an alkaline earth fluorohalide storage phosphor to a temperature in excess of 700°C and controlling the composition of the atmosphere in contact with the phosphor during heating.

The process is characterized in that the ability of the alkaline earth fluorohalide storage phosphor to scatter stimulating electromagnetic radiation of the second wavelength is reduced by melting the alkaline earth fluorohalide and contacting the molten alkaline earth fluorohalide with at least one halogen gas chosen from among chlorine, bromine and mixtures thereof.

In another aspect, this invention is directed to a process of improving the properties of a storage phosphor capable of internally storing energy received by exposure to X-radiation and subsequently emitting electromagnetic radiation of a first wavelength when stimulated with electromagnetic radiation of a second wavelength comprised of heating an alkaline earth fluorohalide storage phosphor to a temperature in excess of its melting point and cooling the alkaline earth fluorohalide storage phosphor to a temperature of less than 350°C.

The process is characterized in that the ability of the alkaline earth fluorohalide storage phosphor to scatter stimulating electromagnetic radiation of the second wavelength is reduced by limiting the fluoride content of the alkaline earth fluorohalide to 51 mole percent, based on total halide, and quenching the alkaline earth fluorohalide from its melting point to less than 350°C in less than 1 hour in a nonoxidizing atmosphere.

In an additional aspect, this invention is directed to a monocrystalline alkaline earth fluorohalide storage phosphor element having an optical density per millimeter of less than 0.2 when measured (a) after contact with ambient air for at least one week and (b) at a wavelength capable of stimulating emission from the element after exposure to X-radiation.

In still another aspect, this invention is directed to an alkaline earth fluorohalide storage phosphor comprised of microcrystalline particles having a mean diameter of from 0.1 to 100 micrometers. The phosphor is characterized in that the particles have an optical density of less than 1.5 per millimeter when measured (a) after contact with ambient air for at least one week, (b) as a packed powder with all voids between the particles of the packed powder being occupied by a transparent liquid having an index of refraction equal to or intermediate that of the a-c and a-b crystallographic planes of the microcrystalline particles, and (c) at a wavelength capable of stimulating emission from the phosphor following exposure to X-radiation.

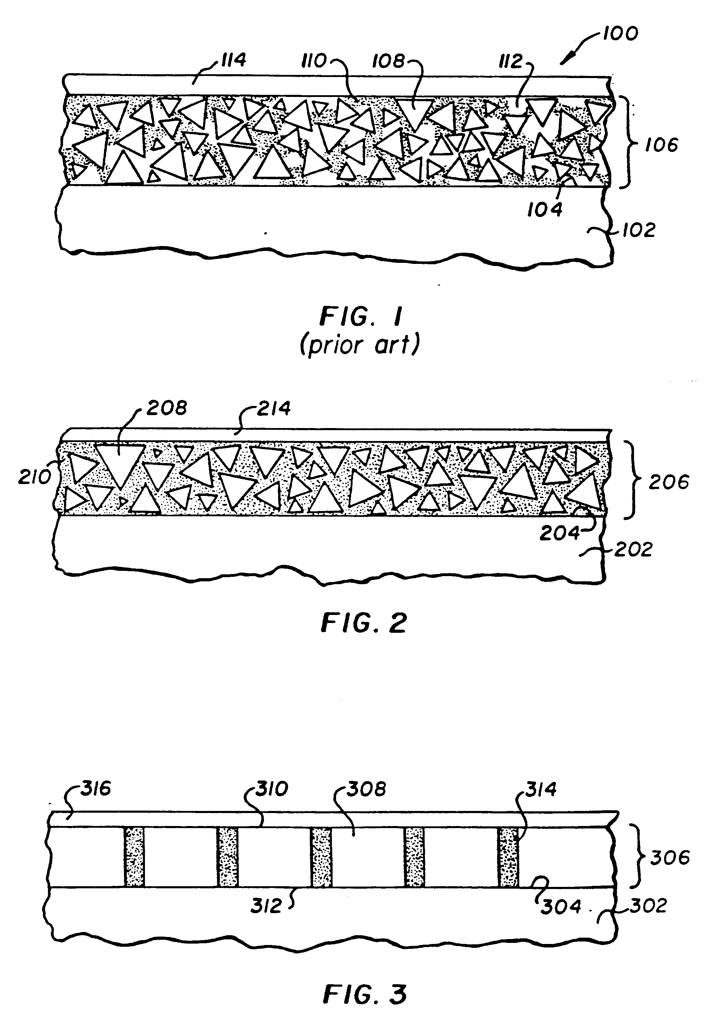

In Figure 1 a portion of a conventional turbid screen 100 is shown. The screen is comprised of a support 102 presenting a planar surface 104 on which is coated a turbid phosphor layer 106. The turbid phosphor layer is comprised of alkaline earth fluorohalide phosphor particles 108 schematically indicated by Δ's, but in practice typically irregularly shaped microcrystals of differing sizes. The particles are held together as a physically coherent coating by a limited amount of binder 110, schematically indicated in black. Voids 112 occupy the intersticial areas not occupied by binder. An optional transparent overcoat 114 is shown overlying the turbid phosphor layer.

By minimizing the binder a maximum mismatch of refractive indices at the interfaces of the phosphor particles and voids is realized that increases light scattering. Minimizing the binder renders the phosphor layer susceptible to physical damage. The optional transparent overcoat is therefore commonly employed to physically protect the phosphor layer from damage in handling and use. The binder employed in conventional turbid screens are common organic polymers, such as cellulose acetate or polyurethane, that have refractive indices much lower than that of the phosphor particles. This further contributes to light scattering. Finally, the phosphor particles are themselves turbid, thereby internally scattering light. Conventional alkaline earth fluorohalide turbid screens, whether intended for use as intensifying screens or for use as storage phosphor screens, have essentially similar constructions, although different optimizations of the phosphor compositions are preferred for each of the alternative screen applications.

Because of high levels of internal scattering of stimulating electromagnetic radiation conventional turbid alkaline earth fluorohalide storage phosphor screens exhibit undesirably low levels of image sharpness at high levels of stimulation (i.e., when used as high speed screens) and disadvantageously low speed when the level of stimulation is reduced to improve image sharpness. Further, the phosphor particles themselves vary in their light scattering characteristics as a function of the duration of their exposure to ambient air.

The present invention makes available alkaline earth fluorohalide storage phosphors that exhibit reduced levels of scattering of stimulating radiation and that are stable in terms of their stimulating light scattering properties when exposed to ambient air for extended periods of time. Particulate alkaline earth fluorohalide storage phosphors satisfying the requirements of the invention can, if desired, be substituted for conventional alkaline earth fluorohalide storage phosphor particles in conventional turbid screens. Because of their optical stability the phosphors of the invention are more convenient to use for screen construction. The storage phosphor screens themselves exhibit reduced scattering of stimulating radiation.

In a preferred application for the novel alkaline earth fluorohalide storage phosphor particles of this invention they can be used to construct transparent storage phosphor screens, where the term "transparent" is used in its art recognized sense to indicate screens in which all controllable sources of stimulating light scattering have been minimized.

A preferred transparent storage phosphor screen 200 satisfying the requirements of the invention is shown in Figure 2. A support 202 having a planar upper surface 204 can take the form of any convenient conventional transparent, reflective or non-reflective support, where light transmission, reflection or absorption properties may be selected to be similar or different for each of the stimulating radiation and emitted radiation wavelengths. For example, a support that transmits or absorbs stimulating radiation while reflecting emitted radiation is a choice that produces a high level of image sharpness. However, if the stimulating radiation is directed to the screen perpendicular to the planar surface 204, reflection of stimulating radiation will not detract significantly from image sharpness and will significantly increase the effective speed of the screen.

On the surface 204 is located a phosphor layer 206 containing alkaline earth fluorohalide phosphor particles 208 satisfying the requirements of the invention. A binder 210 completely occupies the area surrounding the phosphor particles, thereby minimizing (and preferably entirely eliminating) voids in the phosphor coating. This eliminates a major source of light scattering. By choosing the binder to exhibit a refractive index that approximates and, preferably, substantially matches that of the phosphor particles at the wavelengths of stimulation, further significant reduction in light scattering that would otherwise occur at the interface of the phosphor particles and binder is achieved. An optional conventional transparent protective overcoat 214 overlies the phosphor layer.

The binder 210 is preferably chosen to be transparent to radiation wavelengths emitted by the phosphor particles. The binder must in addition be sufficiently transparent to stimulating radiation wavelengths to allow layer penetration to the phosphor particles. The binder can, if desired, contain a small quantity of an absorber for the stimulating radiation (e.g., finely divided carbon or a dissolved dye) to further insure against lateral transmission (e.g., light piping) of the stimulating radiation in the phosphor layer. DeBoer et al (R-22), cited above, illustrates conventional binder compositions satisfying the requirements of the invention. Apart from their refractive indices, which are higher than used for turbid storage phosphor screens, the binders of the "transparent" storage phosphor screens are subject to the same selection considerations.

The phosphor particles are microcrystals of conventional sizes and size-frequency distributions. The mean equivalent spherical diameter of the phosphor particles as incorporated in the storage phosphor screens can range from 0.1 to 100 $\mu$m, most commonly 1 to 90 $\mu$m, depending upon the degree of image sharpness desired. When prepared by grinding the particles exhibit a standard error function (Gaussian) distribution. However, screen classification can be employed to eliminate the largest and/or smallest particle sizes or to select any particular desired size range.

The phosphor particles are novel in that they exhibit a low level of internal scattering of stimulating radiation wavelengths. The low levels of internal light scattering can be measured by placing the particles in an environment that eliminates surface scattering of light and measuring the optical density per millimeter of the particles to the stimulating electromagnetic wavelengths. It has been observed that the alkaline earth fluorohalide storage phosphor particles of the invention exhibit an optical density per millimeter of less than 1.5, with preferred materials exhibiting an optical density per millimeter of less than 1.0, when measured (a) after contact with ambient air for at least one week, (b) as a packed powder with all voids between the particles of the packed powder being occupied by a transparent liquid having an index of refraction equal to or intermediate that of the a-b and a-c crystallographic planes of the microcrystalline particles, and (c) at a wavelength capable of stimulating emission from the phosphor following exposure to X-radiation.

Step (a) of the measurement technique is employed to distinguish the phosphor particles from those previously prepared in the art that appear transparent as initially prepared, but quickly become turbid after standing in ambient air. As demonstrated in the Examples below phosphors have been prepared that exhibit no observable change in optical density after storage in air for extended periods.

Step (b) eliminates surface turbity by bringing a liquid of matched refractive index into contact with the surface of the particles. The particles are measured by filling a receptacle reservoir with the particles. The term "packed powder" is used to indicate that the particles fill the available receptacle volume. No significant level of compressive force is required to accomplish this, although tamping to assure that the available space is filled is prudent. With the particles filling the receptacle reservoir there, of course, remain in the receptacle reservoir voids between particles. The voids between the packed powder particles are filled with the refractive index matching liquid.

In considering what is meant by refractive index "matching" both as applied to the choice of the liquid for measurement step (b) and the choice of a binder for a transparent screen (e.g., binder 210), it must be borne in mind that alkaline earth fluorohalide crystals are birefringent--that is, they exhibit a somewhat different index of refraction to light transmission parallel to their a-b as compared to their a-c crystallographic planes. At 632.8 nm pure BaFBr (F/Br = 1), for example, exhibits a refractive index of 1.724 parallel to its a-c crystallographic plane and 1.738 parallel to its a-b crystallographic plane while pure BaFCl (F/Cl = 1) exhibits a refractive index of 1.648 parallel to its a-c crystallographic plane and a refractive index of 1.660 parallel to its a-b crystallographic plane. Since the crystal plane orientations of the phosphor particles in the phosphor layer are random, the best practical °match° to the surrounding medium, whether in relation to the liquid used in step (b) or the binder 210, is to choose the surrounding medium so that it exhibits a refractive index equal to or intermediate those of the a-b and a-c crystallographic planes of the phosphor crystals.

Requirement (c) of the measurement technique requires that a wavelength capable of stimulating the phosphor after it has been exposed to X-radiation be used for optical density per millimeter determinations. For example, it will usually be convenient to employ the same spectral region used for read-out of the storage phosphor screen to perform the optical density measurement.

The phosphor particles exhibit their lowest optical density to stimulating radiation wavelengths prior to exposure to X-radiation. If, therefore, phosphor particles of an undetermined prior exposure history satisfy the optical density per millimeter requirements above, the phosphor particles satisfy the requirements of the invention. For example, any alkaline earth fluorohalide phosphor particles exposed to X-radiation that in their discharged state satisfy the above optical density per millimeter criterion, satisfy the requirements of the invention, even though their optical density may be higher immediately following exposure to X-radiation. Any conventional technique for discharge, such as exposure to stimulating radiation or heating, can be employed. Note that any increase in optical density due to stimulating radiation during X-radiation exposure is a result of increased light absorption and is not indicative of any increased scattering of stimulating radiation.

Although it is usually most convenient in preparing alkaline earth fluorohalide phosphors to determine their optical density per millimeter characteristics before constructing a storage phosphor screen, it is recognized that in some instances the determination of the optical density per millimeter properties of phosphor particles may be required after a storage phosphor screen has been constructed. The optical density determination techniques described above can be applied, if desired, to a phosphor layer, such as 206, since the phosphor particle coating density will in most instances approximate that of a packed powder. Further, from readily measurable phosphor layer parameters the optical density per millimeter of the phosphor particles can be calculated.

The preparation of alkaline earth fluorohalide phosphor particles with unusually low and highly stable optical densities came about as a result of extended investigations leading to novel procedures for phosphor preparation. From a variety of observations it has been concluded that the internal turbidity of conventional alkaline earth fluorohalide storage phosphors is primarily attributable to inclusion of oxygen during preparation, a significant minor proportion of internal optical density is attributable to physical defects unrelated to oxygen. Typically, conventional phosphor preparations occlude as impurities more than 100 molar parts per million of oxygen. It is believed that the occluded oxygen produces crystal defects that account for the internal turbidity heretofore observed in alkaline earth fluorohalide phosphors. The increase in internal turbidity observed in these conventional phosphors when exposed to ambient air is attributed to the further disruption of the crystal lattice by additional oxygen ingestion made possible by the hygroscopic nature of the crystals and oxygen migration paths to the interior of the crystals provided by their original incorporated defects.

The preparation of alkaline earth fluorohalide phosphors of stable, low optical densities has been achieved by devising preparations consistent with minimizing internal oxygen impurities. When conventional levels of oxygen incorporation are present in the phosphor crystals, the turbidity is too high to allow productive microscopic examination of crystal defects. We discovered, however, that at the threshold of low optical densities as the oxygen level was reduced the internal crystal defects diminished to clearly observable individual cruciform crystal lattice defects. With still further oxygen reductions the percentage of the total crystal lattice occupied by the defects was further reduced, and this correlated with observed reductions in optical density. Since optical densities of the phosphors of the invention are readily measured, this is the parameter best suited for distinguishing the phosphors of this invention from conventional phosphors. On the other hand, measurement of oxygen impurity levels below 100 molar parts per million (mppm), although feasible, are comparatively more difficult because of the care that must be exercised to avoid encroachment of oxygen from the atmosphere. Nevertheless, from those measurements obtained under conditions avoiding oxygen encroachment it has been concluded that the alkaline earth fluorohalide phosphors of this invention exhibit internal oxygen impurity levels of less than 50 mppm. Determinations of oxygen impurity levels below 100 mppm have employed conventional electron paramagnetic resonance, photoluminescence and optical absorption measurement techniques. The lower optical density phosphors of this invention contain oxygen impurity levels of less than 20 mppm. Oxygen impurity levels of 5 mppm and less have been observed.

It has been discovered that the phosphors of this invention can be prepared by bringing a halogen gas into contact with a molten conventional alkaline earth fluorohalide composition, either before or after introduction of conventional minor amounts of modifying elements. As is generally understood by those skilled in the art, the crystal lattice of alkaline earth fluorohalide storage phosphors is basically that formed by alkaline earth cations and a combination of fluoride anions and anions provided by at least one additional halide (hereinafter referred to as the combined halide), typically chloride, bromide or a mixture of both. The halogen gas brought into contact with the molten alkaline earth fluorohalide is at least one of chlorine and bromine. To avoid altering the composition of the molten phosphor it is preferred to choose the halogen gas to match the combined halide in the molten phosphor. Since all combinations of bromide and chloride as the combined halide in the phosphor are operative, the phosphor remains operative even if the composition of the combined halide is changed.

The function of the halogen gas is to purge oxygen impurities from the molten material. Any halogen gas containing atmosphere that is free of oxygen can be employed. The atmosphere can be provided entirely by halogen gas, if desired, thereby maximizing oxygen purging. It is generally most convenient to incorporate the halogen gas in a conventional inert purging gas of the type commonly used during phosphor firing, such as a Group 18 gas, nitrogen, or any convenient combination of these.

At least about 1 percent by volume of the atmosphere contacting the molten alkaline earth fluorohalide should be provided by halogen gas, preferably at least 2 percent by volume, and optimally at least 3 percent by volume. A convenient technique for introducing bromine gas into the atmosphere is to bubble the gas forming the remainder of the atmosphere through a reservoir containing liquid bromine at room temperature prior to directing the gas to the furnace containing the molten sample. In this way, the bromine gas can be incorporated in the carrier atmosphere at a concentration at or near its saturation level at room temperature. Chlorine gas can be used alone or is most conveniently mixed as a gas with inert gases.

The duration of halogen contact with the molten sample required to improve significantly the properties is a function of the ratio of the exposed surface to the volume of the molten sample. When the molten sample is contained in the furnace in an open receptacle and no stirring mechanism is employed (a relatively inefficient, but simple and therefore convenient arrangement), halogen gas contact periods ranging from about 30 minutes to 1 day are effective, with preferred times of halogen gas contact ranging from 3 hours to 16 hours. Using a stirring mechanism it should be possible to reduce significantly the duration of halogen gas contact with the molten sample.

The alkaline earth fluorohalide can be held above its melting point for the time periods indicated above without significant degradation. However, to limit even low levels of degradation of the alkaline earth fluorohalide it is preferred to operate no further above the melting point than required to assure complete melting of the sample. The melting point of BaFCl is 1009°C while the melting point of BaFBr is 962°C. The molten sample can be heated to much higher temperatures (e.g., up to 1300°C for short time periods), but is it preferred that the mean temperature of the sample while molten be less than 1120°C and optimally less than 1080°C.

It is known that alkaline earth fluorohalides are capable of functioning as storage phosphors without the inclusion of any additional element--e.g., an activator. The advantage of incorporating an activator is that this concentrates the stimulated emission from the phosphor within a relatively restricted range of wavelengths, thereby increasing emission peak intensity and facilitating sensing.

Three specifically preferred rare earth activators for alkaline earth fluorohalide storage phosphors are $Eu^{+2}$, $Ce^{+3}$ and $Tb^{+3}$. If any of these activators are present during the halogen treatment of the molten sample, they are converted by halogen contact to their higher oxidation state--i.e., $Eu^{+3}$, $Ce^{+4}$ and $Tb^{+4}$. To reduce the activator to its effective lower oxidation state after halogen gas contact with the molten sample, it is necessary to bring the sample into subsequent contact with a conventional reducing atmosphere. This can be undertaken within the temperature ranges indicated above for treatment of the molten sample, or the sample can be held in a reducing atmosphere at or below its melting point using conventional reducing atmosphere firing procedures for alkaline earth fluorohalide phosphors. Hydrogen alone or in combination with inert gases (e.g., nitrogen and/or Group 18 gases) constitutes a preferred reducing atmosphere. It is preferred that the activator reduction step be undertaken at a temperature of at least about 850°C.

After treatment as described above, the sample can be cooled, ground by conventional procedures, and used in its particulate form as a storage phosphor or used in a manner described below to form a low optical density monocrystalline storage phosphor element.

It has been additionally discovered that the optical density of alkaline earth fluorohalide storage phosphors can be further reduced, independently of whether the halogen gas contact step described above has been employed, by quenching a heated sample from its melting point to less than 350°C. It is contemplated to quench a sample already having its optical density reduced by contact with halogen gas immediately following that treatment step or at the conclusion of treatment in a reducing atmosphere or to heat any alkaline earth fluorohalide, regardless of its process of preparation, above its melting point and quench.

The object of quenching is to transform the phosphor from its molten state to a rigid crystal lattice in the minimum practical time. It is believed that this has the effect of preventing the internal aggregation of both oxygen impurity derived and physical defects. Quenching either eliminates the crystal defects or so severely limits the size of the local crystal lattice defects that they cannot be observed microscopically, which for all practical purposes amounts to elimination.

The advantages of quenching are significant if cooling from the melting point of the sample to 350°C is completed in less than one hour. It is, however, preferred to quench through the temperature range in less than 30 minutes and, optimally, in less than 10 minutes. Once the temperature of the stable has dropped below 350°C, the crystal lattice has become sufficiently stabilized against internal oxygen migration that there is little, if any, additional advantage to be gained by accelerating cooling to ambient temperatures or below.

The most convenient atmosphere to have present during quenching is that which is present just prior to quenching. When the sample is just prior to quenching being contacted with halogen gas or being contacted with a reducing gas, as described above, this is a preferred atmosphere. In general it is contemplated to quench in the presence of halogen gas or a reducing gas, each employed alone or in combination with one or more inert gases, such as nitrogen, one or more Group 18 gases or any combination of these. Additionally, it is recognized that the sample can be quenched while held in a vacuum. The term "vacuum" in each occurrence, except as otherwise indicated, indicates an ambient pressure of less than 0.13 Pa (4 X $10^{-4}$ torr.).

Investigations have shown that the optical density reductions produced by quenching are limited to alkaline earth fluorohalide compositions in which fluoride constitutes up to 50.5 mole percent of the total halide. At higher fluoride levels quenching markedly increases the optical density of the phosphor crystal structure.

The phosphor produced by halogen gas contact, halogen gas contact followed by reducing atmosphere contact, by quenching or by any combination of those preparation procedures described above to reduce and stabilize optical density, can be further processed to a particulate form suitable for storage phosphor screen construction according to any convenient conventional technique. Since the phosphor, once formed in its reduced optical density form, exhibits a high level of optical stability, it is unnecessary to protect the particles from contact with ambient moisture or oxygen. The phosphors retain their low optical density characteristics when left in ambient air for a reference comparison period of one week and in practice no measured increase in optical density has been observed for periods ranging from weeks to in excess of a year.

The low optical density phosphors described above can be used as a starting material for forming low optical density monocrystalline alkaline earth fluorohalide storage phosphor elements. This is accomplished by growing a monocrystalline ingot or boule in a vacuum or in the presence of halogen gas or a nonoxidizing atmosphere otherwise employing conventional crystal growing procedures. A convenient approach is to grind a sample of the phosphor to a powder and place the powder in an inert container, such as a pyrolytic graphite coated closed end graphite tube. The filled closed end tube can be conveniently heated to above the melting point of the phosphor particles in a radio frequency induction furnace, so that the phosphor is converted from a powder to a melt. Subsequently, the closed end tube can be slowly lowered out of the region of induction heating. The slow rate of cooling of the emerging tube allows a monocrystalline structure to form on solidification.

The solid monocrystalline ingot or boule can be cleaved to produce individual transparent monocrystalline phosphor elements. The boule cleaves naturally perpendicular to its crystallographic c-axis (i.e., along an a-b crystallographic plane). Since a 1 mm thickness of the phosphor crystal is adequate to absorb essentially all incident X-radiation, the boule is contemplated to be cleaved into individual monocrystalline elements having thicknesses of less than 2 mm measured along their crystallographic c-axes. Even thicker monocrystalline elements can be formed; however, the portion of the phosphor lying more than 1 mm below the surface receiving X-radiation will not be efficiently utilized. The minimum thickness of the elements is determined by physical fragility and limited X-radiation absorption capabilities. Contemplated practical phosphor monocrystalline element thicknesses for transparent storage phosphor screen constructions are in the range of from 0.1 to 2 mm, with thicknesses in the range of from 0.2 to 1 mm being preferred.

After cleaving and before putting the monocrystalline storage phosphor elements of the invention to use, it is possible to further reduce their optical density by annealing the elements in a vacuum or a nonoxidizing atmosphere. The nonoxidizing atmosphere can be any convenient inert gas (e.g., any Group 18 gas or nitrogen), any convenient reducing gas (e.g., hydrogen), or combination of these gases. Because of the lower temperatures used for annealing as compared to melting, a nonoxidizing oxygen containing gas, such as carbon monoxide, can be employed. However, it is preferred that no halogen gas be employed, since pitting of the crystal faces has been observed to occur with halogen gas present.

Annealing is undertaken at temperatures below the melting point of the phosphor, since melting clearly would destroy the monocrystalline element as a physical structure. What is desired is to heat the crystal structure to a temperature that allows oxygen impurity mobility within the crystal structure. In this way the oxygen can migrate to the surfaces of the monocrystalline element and exit into the surrounding atmosphere or vacuum. While even moderate heating will afford some opportunity for oxygen impurity mobility, at lower annealing temperatures the time required for effective further reduction of optical density may be impractically long. It is preferred to anneal at a temperature of at least 850°C, optimally at least 900°C. The duration of annealing is largely a matter of choice. At least some reduction in optical density can be realized merely by heating to the preferred minimum annealing temperature followed by spontaneous cooling. Since annealing occurs at temperatures below the melting point of the phosphor, no observable degradation of the phosphor composition is observed by holding the monocrystalline elements at their annealing temperature for extended periods. Generally overnight (16 hour) or one day (24 hour) to one week annealing periods are convenient and effective in practical applications. At the conclusion of annealing, the monocrystalline elements can be allowed to spontaneously cool or quenched, as described above.

The monocrystalline phosphor elements prepared by the preparation procedure described above have in all instances (i.e., with or without annnealing) optical densities per millimeter of less than 0.2. The preferred preparation procedures are capable of producing optical densities per millimeter of less than 0.1 in the monocrystalline elements.

In Figure 3 a transparent storage phosphor screen 300 is shown constructed employing low optical density monocrystalline alkaline earth fluorohalide phosphor elements. The screen is comprised of a support 302 that can be selected identically as support 102 or 202. The support presents a planar surface 304 on which is located a storage phosphor layer 306. The storage phosphor layer is constructed of a plurality of individual monocrystalline alkaline earth fluorohalide phosphor elements 308 each having an upper surface 310 and a lower surface 312 lying in an a-b crystallographic plane.

A binder 314 is shown joining adjacent monocrystalline elements. The binder can, if desired, be chosen identically as the binder 210. Another alternative is to select the binder to optically isolate each monocrystalline element from those next adjacent. This can be done by selecting a binder that is opaque to the wavelengths of the stimulating radiation (although preferably capable of transmitting wavelengths of stimulated emission). This insures that each monocrystalline element can be individually addressed and stimulated and that no portion of the emission sensed can be attributed to a next adjacent element. In this instance each monocrystalline element represents an individual pixel or selected group of pixels, depending upon the size of the monocrystalline element and the level of image sharpness desired.

The transparent overcoat 316 can be selected identically as overcoats 114 and 214. The monocrystalline elements can, if desired, be attached to the support by any convenient adhesive (not shown). Generally conventional binder and overcoat compositions are also usefully employed as subbing layers for facilitating adhesion of the monocrystalline elements.

The procedures of optical density reduction and stabilization described above are generally applicable to alkaline earth fluorohalide storage phosphors. The phosphors of the invention, apart from their incorporated oxygen impurity levels, can take any convenient conventional composition. For example, the invention is applicable to any of the conventional storage phosphor compositions disclosed by R-4 through R-22, cited above.

In one specifically preferred form the storage phosphors of the invention satisfy the following formula:

(I)

$$MF_fX_x:M^I_mR_r$$

where

M is $Ba_{(1-y)}M^{II}_y$,

$M^{II}$ is at least one of Mg, Ca and Sr,

X is at least one of Cl and Br,

$M^I$ is at least one alkali metal,

R is a rare earth activator,

y is 0 to 0.2,

f is 2-x,

x is 0.9 to 1.1,

m is 0 to 0.5, and

r is 0 to 0.1.

From formula I it is apparent that barium preferably accounts for at least 80 mole percent of the total alkaline earth elements present and can be the only alkaline earth element present. To improve performance (e.g., to increase storage efficiency) it is generally preferred that y be at least $5 \times 10^{-4}$ and optimally at least $10^{-3}$, y preferably being limited to 0.1 and optimally $10^{-2}$. Any selection or combination of the alkaline earths other than barium is feasible.

The halide selection has an important influence on performance, since it is the halide sites in the crystal structure that produce emission on stimulation. When X is entirely Br, the useful stimulation range of the phosphor is in the range of from 450 to 750 nm. The peak stimulation response attributed to bromide ion vacancy emission centers, $F(Br^-)$, occurs at 590 nm while the peak stimulation response attributed to fluoride ion vacancy emission centers, $F(F^-)$, occurs at 490 nm. On the other hand, when X is entirely Cl, the useful stimulation range of the phosphor is in the range of from 400 to 600 nm. The peak stimulation response within the 400 to 600 nm range attributed to bromide ion vacancy emission centers, $F(Cl^-)$, occurs at 530 nm while the peak stimulation response attributed to fluoride ion vacancy emission centers, $F(F^-)$, occurs at 430 nm. When mixtures of bromide and chloride are present as the combined halide, stimulation sensitivity peaks are proportionately shifted. To realize the reductions in optical density afforded by quenching the excess of fluoride as compared to the combined halide is limited. Preferably x is at least 0.99, limiting F to a maximum of 50.5 mole percent, based on total halide. Initial investigations of alkaline earth fluorohalide phosphors were based on the assumption that fluoride and the combined halogen had to be present in equal amounts. Subsequent investigations revealed evaporation of a portion of the combined halide during phosphor preparation. Still further investigations revealed that for turbid screen applications a slight excess of fluoride as compared to the combined halide was desirable, since it enhanced light scattering. For that reason for transparent screen constructions it is preferred to limit the fluoride to 50 mole percent or less, based on total halide. In other words, optimally x is at least 1.0.

The alkali metals are optional ingredients known to incrementally increase speed. Best results are generally observed when sodium is employed in combination with bromide or potassium is employed in combination with chloride. It is preferred that m be at least $10^{-5}$ and optimally at least $10^{-4}$. It is preferred that m be limited to 0.2 and optimally, limited to 0.15.

No activator for the phosphor is required to obtain stimulated emissions. However, in the absence of an activator emission occurs over a wide range of wavelengths and is of relatively low peak intensity. Further, that portion of the emission that overlaps the spectral range of stimulation cannot be sensed and is therefore wasted. The ideal arrangement is to concentrate emission within a narrow range of wavelengths in a spectral region displaced from the wavelengths of stimulating radiation. From a review of the references cited above, it is apparent that a wide range of elements have been suggested as useful activators, including all of the rare earth elements, promethium (which is unstable) and possibly lutetium. Nevertheless the preferred rare earth activators and those most commonly selected in the art are $Eu^{+2}$, $Ce^{+3}$ and $Tb^{+3}$. These activators are all capable of assuming a higher oxidation state; however, the lower oxidation state indicated is specifically preferred. In formula I r is preferably at least $10^{-4}$ and optimally at least $5 \times 10^{-4}$, while r is preferably limited to $10^{-2}$ or less and optimally to $5 \times 10^{+3}$ or less. $Eu^{+2}$ has been the activator finding the only extensive use in commercial storage phosphor screens. $Eu^{+2}$ and $Ce^{+3}$ each produce a sharp emission peak at 390 nm, which is conveniently displaced from the stimulation peaks of the phosphors. $Tb^{+3}$ produces an emission peak at 540 nm.

Although oxygen is not a component of the preferred phosphors, the inclusion of a variety of metal and nonmetal oxides has been taught in the art, as illustrated by R-4, R-8, R-9, R-16 and R-20, cited above. Combined oxygen (i.e., oxide oxygen) and occluded oxygen impurities are viewed as distinct entities, with only the latter being viewed as responsible for crystal lattice disruptions creating light scattering sites that increase internal optical density.

## Examples

The invention can be better appreciated by reference to the following detailed examples. Except as otherwise indicated, refraction indices are those measured at 632.8 nm.

## Example 1 (Control)

This comparative example demonstrates the high levels of light scattering demonstrated by alkaline earth fluorohalides prepared by conventional procedures for storage phosphor preparation.

## (a) Preparation of $BaBr_2$

Barium bromide was prepared by reacting 500 grams of $BaCO_3$ (5N grade, APL Engineered Materials, Illinois) with 600 milliliters of 48% assay hydrobromic acid (6N grade, Johnson Matthey). The solution was gravity filtered through a Pyrex™ Buchner funnel with an ultrafine fritted disc (Corning) and then reduced in volume by heating until barium bromide precipitates (as the dihydrate, $BaBr_2 \cdot 2H_2O$). Two liters of HPLC grade 2-propanol (J.T. Baker, Inc.) were added to the cooled solution to further precipitate barium bromide (as the anhydrous salt $BaBr_2$). After stirring the mixture, the precipitate was allowed to settle, and then 1 liter of the solution was carefully decanted and replaced with 1 liter of HPLC grade 2-propanol. The material was stirred and again allowed to settle. This was repeated three more times after which the solid material was separated using a Pyrex brand Buchner funnel with a medium fritted disc (Corning) and washed with 2 liters of HPLC grade 2-propanol in 100 ml volumes. At this stage of the preparation, the solid barium bromide was a mixture of the dihydrate and the anhydrous forms. The filtered and washed barium bromide was placed in a quartz container with a raised cover plate and placed in an electric oven at 70°C for two days after which the temperature was increased in 50°C increments to 270°C over a four day period to produce anhydrous $BaBr_2$. After cooling to about 50°C, the barium bromide was transferred to a cleaned Pyrex bottle for storage.

Approximately 50 grams of the anhydrous $BaBr_2$ were placed in a cleaned pyrolytic boron nitride (PBN) crucible and placed in a quartz furnace tube in a standard tube furnace arranged in a horizontal position. The tube was evacuated with an oil diffusion based pumping system to approximately $8 \times 10^{-6}$ torr as the tempera-

ture was ramped to 315°C over a six hour period. After holding at 315°C for twelve hours, the temperature was then ramped to 945°C over a three hour period. At about 550°C, ultra-pure carrier grade argon (Air Products) was introduced into the quartz tube. The argon was first passed through a purifier (Hydrox Purifier Model 8301, Matheson Gas Products) to further lower the oxygen and water contents of the flowing argon. When the temperature had reached 650°C, the purified argon was routed over bromine (ultrapure liquid, Alfa) in a Pyrex vessel at the rate of about 1 liter/hour. The bromine vapor at equilibrium above the liquid was continuously swept through the quartz tube, through a trap to prevent backstreaming from the bubbler, and then into the bubbler containing sodium sulfite to reduce the $Br_2$ gas to bromide ions. The molten barium bromide was held at 945°C for two hours, and then the furnace was turned off allowing the barium bromide to cool to room temperature at a rate determined by the natural cooling rate of the furnace. The argon was rerouted around the bromine reservoir at approximately 100°C.

(b) Preparation of BaFBr by the flux method of Somaiah and BaBu

BaFBr was synthesized by the flux method of Somaiah and Babu (K.Somaiah and V. Hari Babu, J. Crystal Growth 46, 711 (1979)) which was based upon the reaction

$$BaBr_2 + NaF \longrightarrow BaFBr + NaBr.$$

$BaBr_2$, purified as in Example 1(a), was transferred to a platinum crucible (Johnson Matthey) to which NaF (Puratronics grade, Johnson Matthey), dried at 110°C, had been added and then placed in air in a quartz tube in a standard tube furnace in a horizontal arrangement. A typical preparation consisted of reacting 9.490 grams of $BaBr_2$ with 1.341 grams of NaF. This ratio of materials, as suggested by Somaiah and Babu, were used to prepare a sample with a calculated F to Br ratio of 1.000.

The temperature was ramped to 800°C over a two hour period, held at 800°C for two hours, and then cooled to ambient at 20°C/hour. The cooled BaFBr and NaBr mixture was removed from the platinum crucible and placed in a thimble (Whatman single thickness cellulose extraction thimble, 33 x 54 mm, W. & R. Balston, Ltd. England) in a Soxhlet extractor to remove the NaBr using spectro grade methyl alcohol (Eastman Kodak).

The BaFBr material was ground in an agate mortar using an agate pestle and separated into five size ranges using a series of stacked stainless steel USA Standard Testing Sieves (A.S.T.M.E-11 specification) (W.S. tiler, Inc.). The separated ranges collected were 75-90 µm, 63-75 µm 53-63 µm, 38-53 µm, and <38 µm.

The ground, sized, and air dried (three hours, 110°C) BaFBr powders were added to a 1 mm path length quartz cuvet cell, and then the appropriate index matching fluid (R.P. Cargille Laboratories, Inc., Cedar Grove, N.J.) was added. The index matching fluid was chosen to minimize the optical density of the BaFBr dispersion in the 633 nm region. The mixtures were carefully agitated with a stainless steel needle to wet all of the powder and to remove any entrapped air bubbles. Great care was taken to obtain a uniform distribution of the solid particles in the index matching fluid. The cells were checked for uniformity along the cell length (3 cm) using optical absorption measured at 633 nm with a Perkin-Elmer Lambda 9™ uv/vis/nir spectrophotometer. The optical densities of the various samples were then recorded at 633 nm.

The optical densities obtained from powder samples of various size ranges are given in Table 1.

<u>Table I</u>

Material: BaFBr synthesized by the flux method of Somaiah and Babu

Index matching fluid: Cargille Series M with index of refraction of 1.735

| Size range (µm) | Optical density at 633 nm |
|---|---|
| 75-90 | 2.32 |
| 53-63 | 2.38 |
| 38-53 | 2.36 |
| <38 | 2.42 |

Example 2

BaFBr was prepared by the direct reaction:

$$BaBr_2 + BaF_2 \longrightarrow 2BaFBr.$$

For the direct reaction of $BaBr_2$ and $BaF_2$, $BaBr_2$ from Example 1 was left in the PBN crucible, $BaF_2$ optical grade single crystal pieces (Harshaw-Englehard, Ohio) were added, and the crucible was returned to the quartz tube, which was then evacuated to approximately $1.1 \times 10^{-3}$ Pa ($8 \times 10^{-6}$ torr). The temperature was then ramped to 315°C over a two hour period, held at 315°C under vacuum for one hour, and then ramped to 1065°C over a three hour period. A continuous flow of about 1 liter/hour of purified argon was introduced into the quartz furnace tube at 550°C and then at 600°C, the purified argon was prerouted over bromine in a bromine reservoir. The bromine vapor at equilibrium above the liquid was continuously swept through the quartz furnace tube, then through a trap to prevent backstreaming and into a bubbler containing sodium sulfite to reduce the $Br_2$ gas to bromide ions. The molten BaFBr was held at 1065°C for two hours in the argon/$Br_2$ flow, after which the furnace was turned off, allowing the material to be cooled to ambient at the rate at which the furnace naturally cooled. The argon was rerouted around the bromine reservoir at approximately 100°C. In a typical preparation, calculated to synthesize BaFBr with a F to Br ratio of 1.000, 34.5910 grams of $BaF_2$ single crystal pieces were added to 58.6170 grams of purified $BaBr_2$.

The material was ground, sized, dried, and loaded into a 1 mm path length optical cell with the appropriate index matching fluid as described in Example 1.

## Table II:

### Material: BaFBr with a calculated F to Br ratio of 1.000 made by the direct method with a two hour $Br_2$ treatment at 1065°C and then slowly cooled

### Index matching fluid: Cargille Series M with index of refraction of 1.735

| size range (μm) | optical density at 633 nm |
|---|---|
| 75-90 | 1.10 |
| 63-75 | 1.25 |
| 53-63 | 1.30 |
| 38-53 | 1.38 |

Example 3

The BaFBr prepared in Example 2 was remelted under an atmosphere of purified argon and cooled again by turning off the furnace. The optical density of the sample was similar to that observed in Example 2.

Example 4:

BaFBr was synthesized as described in Example 2, but the $Br_2$ gas treatment times for both the $BaBr_2$ purification and for the BaFBr synthesis by the direct method were extended to 6 hours. The BaFBr material was ground, sized, dried, and loaded into a 1 mm path length optical cell with the appropriate index matching fluid as described in Example 1. The optical densities of the various size ranges are given in Table III.

## Table III:

Material: BaFBr with a calculated F to Br ratio of 1.000 made by the direct method with a six hour $Br_2$ treatment at 1065°C and then slowly cooled

Index matching fluid: Cargille Series M with index of refraction of 1.735

| size range (μm) | optical density at 633 nm |
|---|---|
| 75-90 | 0.713 |
| 63-75 | 0.773 |
| 53-63 | 0.920 |
| 38-53 | 1.02 |
| <38 | 1.08 |

### Example 5:

Twenty-five grams of the BaFBr material from Example 4 were put into a cleaned PBN crucible, placed onto a quartz disk, lowered to the bottom of a round bottom quartz tube, and evacuated to approximately 8 x $10^{-6}$ torr for two hours. Purified argon was then let into the quartz tube near the top at the opposite end from the sample and then out an exit also near the top, through a trap and into a bubbler at the rate of about 5 liters/hour. Once the tube was brought up to atmospheric pressure, the purified argon did not flow over the sample, but provided a positive argon atmosphere above the sample in the quartz tube. The tube was then lowered into a vertical furnace at 1075°C and the BaFBr material melted. After thirty minutes the quartz tube was removed from the furnace and the bottom end, where the sample was located, was plunged into cold water to quench the molten BaFBr sample. After the sample was completely cooled to room temperature, the PBN crucible was raised from the bottom of the quartz tube and the sample removed.

The BaFBr material was ground, sized, dried and loaded into a 1 mm path length optical cell with the index matching fluid described in Example 1.

The optical densities of the various size ranges in the appropriate index matching fluid are given in Table IV.

## Table IV:

Material: BaFBr with a calculated F to Br ratio of 1.000 made as in Example 4 and then remelted and quenched in a purified argon atmosphere

Index matching fluid: Cargille Series M with index of refraction of 1.735

| size range (μm) | optical density at 633 nm |
|---|---|
| 75-90 | 0.569 |
| 63-75 | 0.583 |
| 53-63 | 0.697 |
| 38-53 | 0.980 |
| <38 | 0.981 |

Example 6:

Barium fluorobromide was synthesized as described in Example 4, but with a calculated F to Br (F/Br) ratio of 1.015 (x = 0.993) by adding 28.7860 grams of single crystal pieces of $BaF_2$ to 48.0590 grams of purified $BaBr_2$. The material was remelted and quenched as described in Example 5 and ground, sized, dried, and loaded into a 1 mm path length optical cell with the appropriate index matching fluid as described in Example 1. The optical densities of the various size ranges are given in Table V.

## Table V:

Material: Barium fluorobromide with a calculated F to Br (F/Br) ratio of 1.015 made as in Example 4 and then remelted and quenched in a purified argon atmosphere

Index matching fluid: Cargille series M with an index of refraction of 1.740

| size range (μm) | optical density at 633 nm |
|---|---|
| 75-90 | .553 |
| 63-75 | .636 |
| 53-63 | .700 |
| 38-53 | .791 |
| <38 | .867 |

Example 7: (Control)

This control demonstrates a high optical density produced when an alkaline earth fluorohalide sample exhibits a high ratio of fluoride to the combined halide.

Barium fluorobromide was synthesized as described in Example 4, but with a calculated F to Br ratio of 1.035 (x = 0.983) by adding 16.5037 grams of single crystal pieces of $BaF_2$ to 27.0209 grams of purified $BaBr_2$. The material was remelted and quenched as described in Example 5 and ground, sized, dried, and loaded into a 1 mm path length optical cell with the appropriate index matching fluid as described in Example 1. The optical density of the 53-63 μm size range was given in Table VI.

## Table VI:

Material: Barium fluorobromide prepared by the direct method with a calculated F to Br (F/Br) ratio of 1.035 made as in Example 4 and then remelted and quenched in a purified argon atmosphere

Index matching fluid: Cargille Series M with index of refraction of 1.740

| size range (μm) | optical density at 633 nm |
|---|---|
| 53-63 | 1.68 |

Example 8:

The procedure of Example 4 was employed, but with the phosphor satisfying the formula:

$$Ba_{1-y}Ca_yF_fBr_x:Na_mEu^{+2}r$$

where

$y = 4.6 \times 10^{-3}$;

$f = 1.009$;

$x = 0.991$;

$m = 5.2 \times 10^{-4}$; and

$r = 1 \times 10^{-3}$.

The following starting materials were employed, with amounts parenthetically indicated in grams:

$BaBr_2$ (60.848)

$BaF_2$ (36.083)

$EuF_3$ (0.0855)

$CaF_2$ (0.1475)

$NaF$ (0.0086)

After cooling the phosphor sample was remelted in an argon atmosphere as described in Example 5, except that after remelting the phosphor sample was not quenched, but allowed to cool with the furnace. The material was ground, sized, dried, and loaded into a 1 mm path length optical cell with the appropriate index matching fluid as described in Example 1.

The optical densities of the various size ranges are given in Table VII.

<u>Table VII:</u>

Material: Formula phosphor with a calculated F to Br (F/Br) ratio of 1.018 made as in Example 4 and then remelted in a purified argon atmosphere and slowly cooled

Index matching fluid: Cargille series M with an index of refraction of 1.740

| size range (μm) | optical density at 633 nm |
|---|---|
| 75-90 | .962 |
| 63-75 | 1.11 |
| 53-63 | 1.22 |
| 38-53 | 1.25 |

Example 9:

Example 8 was repeated, except that the sample was quenched following remelting in the argon atmosphere.

The optical densities of the various size ranges are given in Table VIII.

Table VIII:

Material: Formula phosphor with a calculated F to Br (F/Br) ratio of 1.018 made as in Example 4 and then remelted in a purified argon atmosphere and quenched

Index matching fluid: Cargille series M with an index of refraction of 1.740

| size range (μm) | optical density at 633 nm |
|---|---|
| 75-90 | 0.660 |
| 63-75 | 0.784 |
| 53-63 | 0.928 |
| 38-53 | 0.949 |

Example 10:

Example 5 was repeated, but with the ratio of F to Br (F/Br) decreased to 0.99 (x = 1.005). The following starting materials were employed, with the amounts parenthetically indicated in grams:

$BaBr_2$ (60.848)

$BaF_2$ (36.083)

The optical densities of the various size ranges are given in Table IX.

Table IX:

Material: Barium fluorobromide with a calculated F to Br (F/Br) ratio of 0.99 made as in Example 5

Index matching fluid: Cargille series M with an index of refraction of 1.740

| size range (μm) | optical density at 633 nm |
|---|---|
| 75-90 | .553 |
| 63-75 | .636 |

Example 11:

This example illustrates the preparation of a europium doped monocrystalline boule by employing an alkaline earth fluorohalide starting material prepared according to the process of the invention.

Barium fluorobromide was synthesized as in Example 4 by reacting 40.1704 grams of single crystal pieces of $BaF_2$ with 64.8296 grams of purified $BaBr_2$ to give 105 grams of barium fluorobromide with a calculated F to Br (F/Br) ratio of 1.050 ( x = 0.976). A second direct preparation of barium fluorobromide as in Example 4 containing 100 mppm (molar parts per million) was made by reacting 27.0981 grams of $BaF_2$, 43.733 grams of $BaBr_2$, and 0.0032 grams of $EuF_3$, which was then remelted and quenched in a purified argon atmosphere as described in Example 5. The $EuF_3$ was added to the purified $BaBr_2$ as the $BaF_2$ was added. 4.2 grams of the 100 mppm europium containing BaFBr was then mechanically mixed with the 105 gram quantity of BaFBr to give an average europium concentration of 4 mppm. This material was placed in a pyrolytic graphite (PG) coated graphite tube (Union Carbide Advanced Ceramics) and placed in a radio frequency (RF) heated Bridgman™ crystal growth apparatus. The PG coated graphite tube also functioned as a susceptor in the RF field. The crystal growing apparatus was a water-cooled stainless steel chamber with ports for sample introduction, evacuation, and radio frequency feed-through. A quartz window was also provided for viewing into the central region of the chamber. An Ameritherm SP-10 (Scottsville, N.Y.) solid state induction unit was used to drive the water cooled radio frequency coil. It was located in the central region of the chamber and easily viewed through the quartz window. The temperature of the susceptor was monitored through the quartz viewing window by an externally mounted dual wavelength infra-red radiation detector (Ircon). The output of the infra-red detector was linearized and fed to a Microstar™ programmable temperature controller (R.I. Inc.) which controlled the output of the induction unit. The susceptor was attached to the top of an internally water-cooled stainless steel shaft extending through a double quad-ring (Minnesota Rubber Company) feed-through on the bottom of the chamber. The susceptor was capable of being rotated and elevated within the radio frequency coil. Crystal growth was performed in a vacuum.

The sample was first melted and then lowered and raised through the coil once each and then held at the melting point for two hours prior to initiation of the crystal growth. The PG coated graphite tube was lowered through the RF coil at 1.3 mm/hour during the single crystal growth. The top one-quarter of the single crystal boule was visually very clear and qualitatively labeled transparent, whereas the remainder was visually cloudy and qualitatively labeled opaque. Optical absorptions at 264 nm and 274 nm confirmed the presence of $Eu^{+2}$ in the transparent single crystal pieces of BaFBr, and X-ray diffraction confirmed that the transparent material was BaFBr. Similar analysis confirmed that the cloudy portion was also BaFBr. The single crystals easily cleaved perpendicular to their c-axis. A 1.75 mm thick single crystal piece of BaFBr from the visually clear region of the single crystal boule had a measured optical density at 633 nm of 0.08 (0.041 optical density units/mm of sample thickness). A 1.8 mm thick single crystal piece from the visually cloudy region of the single crystal boule had an optical density at 633 nm of 1.02 (0.57 optical density units/mm of sample thickness).

Example 12:

A 2.3 mm thick monocrystalline element of europium containing barium fluorobromide from the top of the single crystal boule and labeled as visually clear as described in Example 11 was exposed in the dark to a 0.48 cm (three-sixteenths inch) diameter beam of X-radiation (40 kV and 40 mA) for ten seconds. The X-radiation exposed single crystal was then transferred in the dark, about five minutes after the X-radiation exposure, to the surface of a piece of blue-sensitive radiographic film and exposed for seven seconds using a 1 mW He-Ne laser (632.8 nm radiation) through a 632.8 nm interference filter and a plastic diffuser. The He-Ne laser was held about 61 cm (two feet) away from the sample. The stimulated emission from the X-radiation exposed europium doped barium fluorobromide single crystal exposed the radiographic film. The original x-ray exposure pattern to the monocrystalline element was readily revealed when the radiographic film was developed in a rapid access processor (Kodak RP X-OMAT Processor, Model M6B).

Example 13:

The 1.75 mm thick monocrystalline element of europium containing barium fluorobromide and labeled visually clear from Example 11 was stored in an unsealed box and placed on an open shelf in the laboratory for 469 days, after which the optical density at 633 nm was remeasured. It exhibited an optical density of 0.08 (0.041 optical density units/mm of sample thickness), showing no increase in optical density. This was significant in that it is stated in the chemical literature that BaFBr doped with $Eu^{+2}$ is hygroscopic (A. Meijerink, "Luminescence of New X-ray Storage Phosphors", thesis, Utrecht, 1990).

Example 14:

The 1.8 mm thick monocrystalline element of europium containing barium fluorobromide labeled visually cloudy from Example 11 was placed in a PBN crucible and annealed in vacuum at 900°C for ninety-six hours. The furnace was turned off and the sample allowed to cool to ambient temperature at the natural cooling rate of the furnace. The optical density measured at 633 nm decreased from 1.02 (0.57 optical density units/mm of sample thickness) to 0.17 (0.095 optical density units/mm of sample thickness) due to the anneal.

Example 15:

A 2.04 mm thick monocrystalline element of europium containing BaFBr and labeled visually cloudy as described in Example 11 was placed in a PBN crucible and annealed in a helium atmosphere at 910°C for 3 days in a vertical round bottom quartz tube. The tube was removed from the furnace and quenched in cold water.

The optical density measured at 633 nm decreased from 1.18 (0.58 optical density units/mm of sample thickness) to 0.11 (0.054 optical density units/mm of sample thickness).

Example 16:

Single crystals of BaFBr are frequently characterized by macroscopic defects distributed throughout the bulk of the material. These defects scatter light making the single crystals appear opaque. The defects often have a 'cruciform' appearance and are quite flat appearing to have a preferential orientation along the a and b-axes in the a-b crystallographic planes of the single-crystal samples. The average defect size and the concentrations of defects has been observed to be decreased by annealing the materials in a PBN crucible. This treatment was found to be effective in vacuum, in argon, in 2% $H_2$:98% $N_2$ and in CO at temperatures ranging between approximately 890°C to just below the melting point of the samples. Some samples were slowly cooled from the annealing temperature to ambient while others were rapidly quenched by plunging the end of the quartz tube containing the crucible into a container of cold water.

Optical microscopy has been used to characterize the defects in the barium fluorobromide monocrystalline elements, both as to size and density, and these results have been compared to a normalized optical density (optical density per unit thickness of the material) for the single crystals. It has been found that the optical density, as measured at 633 nm is proportional to the percentage of the scattering defects.

The percent of observed area covered by cruciform defects, correlated with normalized optical density for representative monocrystalline element samples grown as described in Example 11 are set forth below in Table X.

### Table X:
### Optical transmission and microscopy data obtained from slices of partially annealed BaFBr single crystals.

| BaFBr single crystal | 10-1 | 10-2 | 10-3 | 10-4 | 10-5 |
|---|---|---|---|---|---|
| % area covered by defects* | 0.93 | 1.43 | 1.55 | 1.71 | 7.2 |
| normalized optical density** | 0.27 | 0.30 | 0.38 | 0.57 | 1.03 |

\* The depth of field of the optical microscope was 1 $\mu$m

\*\* optical density/thickness (in mm)

Variations within the same crystal were small and negligible over a small distance (1 cm and less). The above data represent an average of several measurements made within a 1 cm circle on each sample.

## Claims

1. A process of improving the properties of a storage phosphor capable of internally storing energy received by exposure to X-radiation and subsequently emitting electromagnetic radiation of a first wavelength when stimulated with electromagnetic radiation of a second wavelength comprised of

    heating an alkaline earth fluorohalide storage phosphor to a temperature in excess of 700°C and

    controlling the composition of the atmosphere in contact with the phosphor during heating, CHARACTERIZED IN THAT the ability of the alkaline earth fluorohalide storage phosphor to scatter stimulating electromagnetic radiation of the second wavelength is reduced by

    melting the alkaline earth fluorohalide and

contacting the molten alkaline earth fluorohalide with at least one halogen gas chosen from among chlorine, bromine and mixtures thereof.

2. A process according to claim 1 further characterized in that the same halogen is present in the gas and the molten alkaline earth fluorohalide prior to contact with the gas.

3. A process according to claim 2 further characterized in that the alkaline earth fluorohalide is an alkaline earth fluorobromide and bromine gas is contacted with the molten alkaline earth fluorobromide.

4. A process according to claim 2 further characterized in that the alkaline earth fluorohalide is an alkaline earth fluorochloride and chlorine gas is contacted with the molten alkaline earth fluorochloride.

5. A process according to any one of claims 1 to 4 inclusive further characterized in that the halogen gas constitutes from 1 to 100 percent by volume of an atmosphere contacting the molten alkaline earth fluorohalide, any remaining gas present in the atmosphere being an inert gas.

6. A process according to claim 5 further characterized in that the halogen gas constitutes at least 2 percent by volume of the atmosphere.

7. A process according to claim 6 further characterized in that the halogen gas constitutes at least 3 percent by volume of the atmosphere.

8. A process according to any one of claims 5 to 7 inclusive further characterized in that the halogen gas is present in the atmosphere in a concentration up to its saturation limit at room temperature.

9. A process according to any one of claims 5 to 8 inclusive further characterized in that the atmosphere contains, in addition to the halogen gas, a Group 18 gas, nitrogen, or a mixture thereof.

10. A process according to claim 1 to 9 inclusive further characterized in that the alkaline earth fluorohalide is kept in its molten state in contact with the halogen gas for a period ranging from 30 minutes to 1 day.

11. A process according to claim 10 further characterized in that the alkaline earth fluorohalide is kept in its molten state in contact with the halogen gas for a period ranging from 3 to 16 hours.

12. A process according to claim 11 further characterized in that the alkaline earth fluorohalide is maintained at a mean temperature less than 1120°C while molten.

13. A process according to claim 12 further characterized in that the alkaline earth fluorohalide is maintained at a mean temperature less than 1080°C while molten.

14. A process according to any one of claims 1 to 13 inclusive further characterized in that the alkaline earth fluorohalide satisfies the formula:

$$MF_f X_x : M^I_m R_r$$

where

$M$ is $Ba_{(1-y)}M^{II}_y$,
$M^{II}$ is at least one of Mg, Ca and Sr,
$X$ is at least one of Cl and Br,
$M^I$ is at least one alkali metal,
$R$ is a rare earth activator,
$y$ is 0 to 0.2,
$f$ is 2-x,
$x$ is 0.9 to 1.1,
$m$ is 0 to 0.5, and
$r$ is 0 to 0.1.

15. A process according to claim 14 further characterized in that at least one of europium, cerium and terbium are present as activators and are reduced to their lower oxidation state by contacting the molten alkaline earth fluorohalide with a reducing gas.

16. A process according to any one of claims 1 to 15 inclusive further characterized in that alkaline earth

EP 0 506 585 A1

fluorohalide contains up to 50.5 mole percent fluoride, based on total halide, and is quenched from its molten state to less than 350°C in less than 1 hour.

17. A process according to claim 16 further characterized in that the alkaline earth fluorohalide is quenched from its molten state to 350°C in less than 30 minutes.

18. A process according to claim 17 further characterized in that the alkaline earth fluorohalide is quenched from its molten state to 350°C in less than 10 minutes.

19. A process according to any one of claims 16 to 18 inclusive further characterized in that the alkaline earth fluorohalide is quenched in an atmosphere substantially free of halogen gas.

20. A process according to claim 14 or 15 inclusive further characterized in that x is 0.99 to 1.01 and the alkaline earth fluorohalide is quenched from its molten state in a nonoxidizing atmosphere to 350°C in less than 10 minutes.

21. A monocrystalline alkaline earth fluorohalide storage phosphor element having an optical density per millimeter of less than 0.2 when measured (a) after contact with ambient air for at least one week and (b) at a wavelength capable of stimulating emission from the element after exposure to X-radiation.

22. A monocrystalline alkaline earth fluorohalide storage phosphor element according to claim 21 further characterized in that the element has an optical density per millimeter of less than 0.1.

23. A monocrystalline alkaline earth fluorohalide storage phosphor element according to claim 21 or 22 further characterized in that the element has parallel major faces perpendicular to its crystalline c-axis and a thickness of from 0.1 to 2 millimeters.

24. A monocrystalline alkaline earth fluorohalide storage phosphor element according to any one of claims 21 to 23 inclusive further characterized in that the element contains an oxygen concentration of less than 50 molar parts per million.

25. A monocrystalline alkaline earth fluorohalide storage phosphor element according to any one of claims 21 to 24 inclusive further characterized in that the alkaline earth fluorohalide satisfies the formula:

$$MF_fX_x:M^I_mR_r$$

where
  M is $Ba_{(1-y)}M^{II}_y$,
  $M^{II}$ is at least one of Mg, Ca and Sr,
  X is at least one of Cl and Br,
  $M^I$ is at least one alkali metal,
  R is a rare earth activator,
  y is 0 to 0.2,
  f is 2-x,
  x is 0.9 to 1.1,
  m is 0 to 0.5, and
  r is 0 to 0.1.

26. A monocrystalline alkaline earth storage phosphor element according to claim 25 further characterized in that R is at least one of $Eu^{+2}$, $Ce^{+3}$ and $Tb^{+3}$.

27. A monocrystalline alkaline earth storage phosphor element according to claim 25 or 26 further characterized in that X is Br and $M^I$ is Na.

28. A monocrystalline alkaline earth storage phosphor element according to any one of claims 25 to 27 inclusive further characterized in that X is Cl and $M^I$ is K.

29. An alkaline earth fluorohalide storage phosphor comprised of microcrystalline particles having a mean diameter of from 0.1 to 100 micrometers,
CHARACTERIZED IN THAT the particles have an optical density of less than 1.5 per millimeter when measured (a) after contact with ambient air for at least one week, (b) as a packed powder with all voids between the particles of the packed powder being occupied by a transparent liquid having an index of refraction equal to or intermediate that of the a-c and a-b crystallographic planes of the microcrystalline particles, and (c) at a wavelength capable of stimulating emission from the phosphor following exposure to X-radiation.

30. An alkaline earth fluorohalide storage phosphor according to claim 29 further characterized in that the particles exhibit an optical density of less than 1.0 per millimeter.

31. An alkaline earth fluorohalide storage phosphor according to claim 29 or 30 further characterized in that the element contains an oxygen concentration of less than 50 molar parts per million.

32. An alkaline earth fluorohalide storage phosphor according to any one of claims 29 to 31 inclusive further characterized in that the alkaline earth fluorohalide satisfies the formula:

$$MF_fX_x:M^I_m R_r$$

where
    M is $Ba_{(1-y)}M^{II}_y$,
    $M^{II}$ is at least one of Mg, Ca and Sr,
    X is at least one of Cl and Br,
    $M^I$ is at least one alkali metal,
    R is a rare earth activator,
    y is 0 to 0.2,
    f is 2-x,
    x is 0.9 to 1.1,
    m is 0 to 0.5, and
    r is 0 to 0.1.

33. An alkaline earth storage phosphor according to claim 32 further characterized in that R is at least one of $Eu^{+2}$, $Ce^{+3}$ and $Tb^{+3}$.

34. An alkaline earth fluorohalide storage phosphor according to any one of claims 29 to 33 inclusive further characterized in that phosphor satisfies the formula:

$$MF_fBr_x:Na_mEu^{+2}_r$$

where
    M is $Ba_{(1-y)}M^{II}_y$,
    $M^{II}$ is at least one of Mg, Ca and Sr,
    y is $5 \times 10^{-4}$ to 0.1,
    f is 2-x,
    x is 0.99 to 1.1,
    m is $10^{-5}$ to 0.2, and
    r is $10^{-4}$ to $10^2$.

35. An alkaline earth fluorohalide storage phosphor according to claim 34 further characterized in that
    y is $10^{+3}$ to $10^{-2}$,
    m is $10^{-4}$ to 0.15, and
    r is $5 \times 10^{-4}$ to $5 \times 10^{+3}$.

FIG. 1
(prior art)

FIG. 2

FIG. 3

European Patent
Office

# EUROPEAN SEARCH REPORT

Application Number

EP    92 42 0077

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 149 148 (SIEMENS)<br><br>* page 3, line 35 - page 4, line 12; claims 1,2 * | 1-3,5-8,<br>10-13 | C09K11/85<br>G21K4/00 |
| A | US-A-4 057 508 (R.W.WOLFE)<br><br>* claims 1-6 * | 14,15,<br>25,26,<br>32,33 | |
| A | EP-A-0 345 905 (AGFA-GEVAERT)<br><br>* claims 1-14 * | 14-16,<br>25,26,<br>32,33 | |
| A | EP-A-0 345 904 (AGFA-GEVAERT)<br><br>* claims 1-17 * | 14-16,<br>25,26,<br>32,33 | |
| A | EP-A-0 345 903 (AGFA-GEVAERT)<br><br>* claims 1-17 * | 14-16,<br>25,26,<br>32,33 | TECHNICAL FIELDS SEARCHED (Int. Cl.5 )<br><br>C09K |

The present search report has been drawn up for all claims

| Place of search | Date of completion of the search | Examiner |
|---|---|---|
| THE HAGUE | 06 JULY 1992 | DROUOT M.C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)